# EUROPÄISCHE PATENTSCHRIFT

(11) **EP 2 553 006 B1**
(45) Veröffentlichungstag und Bekanntmachung des Hinweises auf die Patenterteilung: **15.07.2015**
(21) Anmeldenummer: 11712207.7
(22) Anmeldetag: 22.03.2011
(51) Int. Cl.: C08K 3/00

(54) **LASERINDUZIERTES KUNSTSTOFFSCHÄUMEN**
LASER-INDUCED POLYMER FOAMING
MOUSSE PLASTIQUE INDUITE PAR LASER

(30) Priorität: 26.03.2010 DE 102010003366
(43) Veröffentlichungstag der Anmeldung: 06.02.2013
(73) Patentinhaber: Chemische Fabrik Budenheim KG, 55253 Budenheim (DE)
(72) Erfinder: KÜMMET, David, 55257 Budenheim (DE); WISSEMBORSKI, Rüdiger, 55435 Gau-Algesheim (DE); WERMTER, Hendrik, 65346 Eltville (DE); SCHNEE, Rainer, 55130 Mainz (DE)
(74) Vertreter: WSL Patentanwälte Partnerschaft mbB
(86) Internationale Anmeldenummer: PCT/EP2011/054295
(87) Internationale Veröffentlichungsnummer: WO 2011/117218

(56) Entgegenhaltungen:
- EP-A1- 0 965 611
- WO-A1-2004/026792
- WO-A1-2006/056485

## Beschreibung

### Gegenstand der Erfindung

Die Erfindung betrifft ein Matrixmaterial aus Kunststoff, vorzugsweise aus thermoplastischem Kunststoff, oder Lack, das ein Additiv enthält, durch welches es ermöglicht wird, durch Bestrahlung mit Laserlicht oder IR-Licht ein Schäumen des Matrixmaterials auszulösen. Die Erfindung betrifft weiterhin die Zusammensetzung des Additivs sowie dessen Verwendung.

### Hintergrund der Erfindung

Das Schäumen von Kunststoffteilen mittels physikalischer oder chemischer Mittel ist bekannt. Dabei werden dem Kunststoff Treibmittel zugemischt oder in ihm gelöst, die in dem Kunststoff für die Erzeugung oder Freisetzung von Gas sorgen. Begrenzt sind solche Verfahren jedoch hinsichtlich der Möglichkeiten, das Schäumen gezielt, kontrolliert und auch lokal begrenzt auszulösen. Es ist bislang auch nicht möglich, durch Schäumung diskrete musterförmige Oberflächenstrukturen zu erzeugen.

Das Schäumen von Kunststoffteilen kann unterschiedlichen Zwecken dienen, beispielsweise der Gewichtsverminderung des Teils, der Herstellung eines thermisch isolierenden Teils, der Herstellung von Schwämmen, anderen saugfähigen Schaumstoffen, der Herstellung von Schwimmkörpern oder der Erzeugung von gestalterischen Elementen, Ornamenten oder Mustern.

Man unterscheidet derzeit verschiedene Schäumungsverfahren:
1. Physikalische Verfahren, bei denen in die geschmolzene Kunststoffmasse physikalisch ein Gas eingeführt und zur Expansion gebracht wird. Die dabei entstehenden Gasblasen führen zu einer Schäumung des Kunststoffs. Nachteilig ist dabei der hohe apparative und steuerungstechnische Aufwand. Die Kunststoffverarbeitungsmaschinen, z.B. Extruder, müssen für die Schäumung mittels Gaszuführung mit hohem Aufwand umgerüstet werden. Ein weiteres Problem stellt die Abstimmung der Gaszugabe und - steuerung in Verbindung mit dem Schmelzverhalten des Kunststoffes dar.
2. Bei der sogenannten Lösungsmethode werden Kunststoffanteile mittels geeigneter Lösungsmittel aus einem Kunststoff-Vollmaterial herausgelöst. Dadurch entstehen Kammern und Kavernen, die zu einer gewünschten Gewichtsverringerung führen. Das Verfahren ist jedoch bereits aus Gründen des Umweltschutzes bedenklich und problembehaftet, da die verwendeten Lösungsmittel mit den darin enthaltenen Kunststoffanteilen große Entsorgungs- oder Wiederaufbereitungsprobleme aufwerfen.
3. Bei chemischen Schäumungsverfahren kamen in der Vergangenheit hauptsächlich FCKWhaltige Produkte als Treibmittel zum Einsatz. Aus Gründen der Umweltverträglichkeit sollen diese Treibmittel jedoch vermieden und gegen andere Treibmittel ersetzt werden. Es kommen zunehmend Diazoverbindungen, N-Nitrosoverbindungen, Sulfohydrazide, Hamstoffderivate, Guanidinderivate, Borhydrid/Wasser-Systeme, Carbonate und Hydrogencarbonate zum Einsatz. Ein Nachteil der Azoverbindungen ist die starke Ammoniakbildung beim Abbau und bei der Schaumbildung, was Bedenken hinsichtlich einer möglichen gesundheitlichen Gefährdung aufwirft. Viele Carbonate und Hydrogencarbonate zersetzen sich ohne weitere Zusatzstoffe unkontrolliert beim Erreichen der Degradationstemperatur. Dies hat eine unkontrollierte Schäumung, gegebenenfalls eine unerwünschte Verfärbung und/oder unerwünschten Geruch zur Folge.
4. Aus Polyurethan (PUR) lassen sich sehr einfach Schäume herstellen, die u.a. als Schaumgummi bekannt sind und als Reinigungsschwämme, Matratzenmaterialien oder Kissen, aber auch zur Wärmedämmung in Gebäuden, Kühlgeräten, Wärme- und Kältespeichern sowie zur Isolierung von Rohrsystemen eingesetzt werden. Seit einiger Zeit werden weitere Anwendungsgebiete für Polyurethan-Schäume erschlossen, beispielsweise im Fahrzeugbau. Polyurethan-Schäume, die für die Wärmedämmung vorgesehen sind, sind geschlossenporig aufgebaut, damit die Zellgase mit ihren niedrigen Wärmeleitfähigkeiten in den Schaumzellen verbleiben. Früher wurde häufig Trichlorfluormethan als Zellgas verwendet. Wegen der ozonschädigenden Eigenschaft dieses halogenierten Kohlenwasserstoffs wurde dieser jedoch weitgehend zunächst durch Kohlendioxid und dann durch Cyclopentan ersetzt, so dass die Schaumzellen heute in der Regel ein Gemisch aus etwa 10 bis 30 % Cyclopentan und als Rest Kohlendioxid enthalten.

Die meisten Treibmittel und Schäumungssysteme selbst oder ihre Reaktionsprodukte sind häufig umweit- oder gesundheitsbedenklich und/oder werfen Probleme bei der Verarbeitung oder Handhabung auf. Ein solches Handhabungsproblem kann beispielsweise eine unkontrolliert schnelle, exotherme oder viel zu langsame Gasbildung sein, was dazu führen kann, dass entweder gar keine richtige Schaumbildung in den Kunststoffteilen stattfindet oder die Schaumstrukturen nicht den gewünschten Anforderungen entsprechen, beispielsweise aufgrund ungleichmäßiger Porenbildung, unerwünschter Porengrößen (zu groß oder zu klein), etc.

Das Schäumen erfolgt bei den bekannten Systemen in der Regel in dem gesamten Kunststoffmaterial. Zur Erzeugung von Mustern, Schrift oder anderen Gestaltungselementen wäre es wünschenswert das Schäumen gezielt, kontrolliert und auch lokal begrenzt auslösen zu können.

Im Bereich der Kunststoffbearbeitung oder -verarbeitung ist die Nutzung von NIR/IR-Strahlung (Wärmestrahlung) mittels Laser oder anderen Strahlungsquellen bekannt. Diese Strahlung wird sowohl zum Kunststoffschweißen als auch zum Markieren und Beschriften von Kunststoffen eingesetzt. NIR/IR-Strahler werden auch zum gezielten Aufheizen von Kunststoffmaterialien genutzt, z.B. beim Herstellungsprozess von PET-Flaschen, dem sogenannten PET-Bottling, oder beim Ziehen von Folien oder im sogenannten Tiefziehprozess zur Herstellung von Bechern. Die Nutzung von NIR/IR-Strahlung zur Erzeugung von Wärme ist sehr effizient, da die Wärmeenergie sehr gezielt und mit weniger Verlusten als beispielsweise bei üblichen Umluftöfen angewendet werden kann. Hierdurch können kürzere Prozesszeiten und ein gezielterer Energieeinsatz erreicht werden. Bei variierenden Materialstärken der zu erwärmenden Werkstücke bieten NIR/IR-Strahler wesentlich bessere Möglichkeiten der Erwärmung, da die Leistung besser und schneller geregelt werden kann.

Die WO 2004/026792 A1 beschreibt ein vorwiegend aus Kohlenstoff zusammengesetztes Schaumstoffmaterial mit hoher innerer Oberfläche und ein Verfahren zu dessen Herstellung durch Pyrolyse von Kunststoff-Schaumstoffen. Die Erzeugung von Poren mit hoher innerer Oberfläche erfolgt beispielsweise durch gezielte Einwirkung von Wasserdampf, Kohlendioxid und/oder Sauerstoff während der Pyrolyse der Kunststoff-Schaumstoffe oder durch anschließende Einwirkung dieser Gase.

Die EP 0 965 611 A1 beschreibt einen Polyurethankörper und ein Verfahren zu dessen Herstellung, bei dem man in einem Schritt a) einer Polyisocyanatkomponente oder einer Polyolkomponente einen Füllstoff aus Glas-, Kunststein- oder Natursteinmehl oder ein Gemisch davon beimischt und in einem Schritt b) ein aus den vorgenannten Komponenten bestehendes Reaktionsgemisch bei einer Temperatur zwischen 30 und 120°C zur Reaktion bringt und bei einem Druck von 7 bis 14 MPa komprimiert. Das Reaktionsgemisch wird in einer beheizten Form zum Aufschäumen gebracht und komprimiert. Vor oder während der Reaktion können dem Reaktionsgemisch Wasser, Treib- oder Blähmittel zugesetzt werden. Diese Stoffe bewirken während der Polymerisationsreaktion, d. h. während der Bildung des Kunststoffes, ein Schäumen, wobei diese Zusätze verbraucht werden. Man erhält ein geschäumtes Material, in dem diese Zusätze nicht mehr als solche enthalten sind.

Die WO 2006/056485 A1 beschreibt ein Verfahren zur Herstellung von Polyurethanschaum, wobei durch Bestrahlung des Materials Energie zur Durchführung einer radikalisch initiierten Polymerisationsreaktion bzw. Vernetzungsreaktion zugeführt wird.

### Aufgabe

Die Aufgabe der vorliegenden Erfindung bestand darin, ein schäumbares Matrixmaterial aus Kunststoff oder Lack bereitzustellen, bei dem sich das Schäumen und die Gasbildung besser steuern lassen als bei bekannten Systemen und es möglich ist, das Schäumen gezielt, kontrolliert und auch lokal begrenzt auszulösen, um beispielsweise diskrete musterförmige Oberflächenstrukturen, Omamente oder Schrift zu erzeugen.

### Beschreibung der Erfindung

Die erfindungsgemäße Aufgabe wird gelöst durch ein Additiv für ein Matrixmaterial aus Kunststoff oder Lack für ein durch Bestrahlung mit Laserlicht oder IR-Licht auslösbares Schäumen des Matrixmaterials, wobei das Additiv wenigstens folgende Bestandteile umfasst:
a) wenigstens ein Absorbermaterial, welches eingebettet oder gelöst in dem Matrixmaterial Laserlicht oder IR-Licht absorbiert und eine lokale Erwärmung in dem Matrixmaterial am Ort der Bestrahlung mit Laserlicht oder IR-Licht bewirkt, und
b) wenigstens ein Treibmittel, welches beim Erwärmen aufgrund der Bestrahlung mit Laserlicht oder IR-Licht auf Temperaturen über 50 °C durch Zerfall, chemische Umwandlung oder Reaktion ein das Matrixmaterial schäumendes Gas erzeugt,
wobei das Treibmittel unter folgenden ausgewählt ist:
i) Kohlendioxidträger, die unter Zerfall und/oder Reaktion mit wenigstens einem weiteren Stoff CO₂-Gas erzeugen,
   ausgewählt unter Carbonaten, Hydrogencarbonaten und Carbamaten der Alkalimetalle, der Erdalkalimetalle, des Aluminiums, der Übergangsmetalle und/oder von Ammonium, vorzugsweise ausgewählt unter Natriumcarbonat, Natriumhydrogencarbonat, Magnesiumcarbonat, Magnesiumhydrogencarbonat, Calciumcarbonat, Calciumhydrogencarbonat, Aluminiumcarbonat, Aluminiumhydrogencarbonat, Eisencarbonat, Eisenhydrogencarbonat, Ammoniumcarbonat, Ammoniumhydrogencarbonat, Ammoniumcarbamat, und Gemischen der vorgenannten,
ii) Kohlendioxidträger in Kombination mit Säureträgern, die unter Zerfall und/oder Reaktion CO₂-Gas erzeugen, wobei der Kohlendioxidträger unter den unter i) angegebenen Verbindungen ausgewählt ist und der Säureträger ausgewählt ist unter
   Salzen von Phosphor enthaltenden Oxoanionen, vorzugsweise unter Phosphaten, kondensierten Phosphaten, Phosphonaten, Phosphiten, gemischten Hydroxidphosphaten und Cyanuraten,
   besonders bevorzugt ausgewählt unter saurem Natrium-Pyrophosphat (SAPP), Monocalciumphosphat-Monohydrat (MCPM), Dicalciumphosphat-Dihydrat (DCPD), Natrium-Aluminium-Sulfat (SAS), Natrium-Aluminium-Phosphat (SALP), Calcium-Magnesium-Aluminium-Phosphat, Calciumpolyphosphat, Magnesiumpolyphosphat und Gemischen der vorgenannten,
iii) Verbindungen, die unter Zerfall wenigstens N₂-Gas erzeugen,
   vorzugsweise ausgewählt unter Azoverbindungen, Hydraziden, Semicarbaziden, Triazolen, Tetrazolen, N-Nitrosoverbindungen, Benzoxazinen,
iv) Verbindungen, die unter Zerfall und/oder Reaktion mit wenigstens einem weiteren Stoff Kohlendioxid und Wasser erzeugen,
   vorzugsweise ausgewählt unter organischen Carbonsäuren und deren Salzen, vorzugsweise Zitronensäure, Zitrat, Fumarsäure und Fumarat,
   und
v) Kombinationen und Gemische der vorgenannten, und
wobei das Absorbermaterial unter folgenden ausgewählt ist:
i) Phosphaten, kondensierten Phosphaten, Phosphonaten, Phosphiten und gemischten Hydroxid-Phosphat-Oxoanionen von Metallen, die unter den Elementen der 3. bis 6. Periode der II. und III. Hauptgruppe, der 5. bis 6. Periode der IV- Hauptgruppe sowie der 4. bis 5. Periode der III. bis VIII. Nebengruppe und der Lanthaniden des Periodensystems der Elemente ausgewählt sind, vorzugsweise Cu, Sn, Ca, Mo, Fe, Co, Sn,
   bevorzugter unter Kupfer-Phosphaten, Zinn-Phosphaten, Eisen-Phosphaten, Nickel-Phosphaten. Molybdän-Phosphaten, Kobalt-Phosphaten, Mangan-Phosphaten und Antimon-Phosphaten,
   besonders bevorzugt unter Kupfer-Phosphaten, Zinn-Phosphaten und Eisen-Phosphaten, ganz besonders bevorzugt Kupfer-Hydroxidphosphat [KHP; Cu₄(OH)₂(PO₄)₂],
ii) Metalloxiden und Metallmischoxiden,
   vorzugsweise unter Antimonoxid (Sb2O3), Zinnoxid (SnO4), Titanoxid (TiO2), Indiumzinnoxid (In2O3/SnO2; ITO), Antimonzinnoxid (ATO)
iii) plättchenförmigen Pigmenten aus Metall, vorzugsweise aus Al, Cr, Fe, Au oder Ag, unbeschichtet oder mit einer oder mehreren Metalloxidschichten bedeckt, wobei das Metalloxid vorzugsweise unter Titandioxid, Antimon(III)oxid, Zinkoxid, Zinnoxid, Zirkoniumdioxid, Chromoxid, Nickeloxid, Kupferoxid, Kobaltoxid, Eisenoxid (Fe₂O₃, Fe₃O₄) ausgewählt ist, besonders bevorzugt unter Antimon(III)oxid alleine oder in Kombination mit Zinnoxid.
iv) organischen Absorbern, vorzugsweise organischen NIR-Absorbern, besonders bevorzugt Phthalocyaninen und Naphthalocyaninen, insbesondere Kupfer(II)-1,4,8,11,15,18,22,25-octabutoxy-29H,31H-phthalocyanin oder Vanadyl-2,9,16,23-tetraphenoxy-29H,31H-phthalocyanin oder Vanadyl-5,14,23,32-tetraphenyl-2,3-naphthalocyanin oder Vanadyl-2,11,20,29-tetra-tert-butyl-2,3-naphthatocyanin, Lumogenen und Quaterrylene-Farbstoffen.

Die erfindungsgemäße Aufgabe wird weiterhin gelöst durch ein Matrixmaterial aus Kunststoff, vorzugsweise aus thermoplastischem Kunststoff, oder Lack, welches 0,01 bis 50 Gew.-% des vorgenannten erfindungsgemäßen Additivs für ein durch Bestrahlung mit Laserlicht oder IR-Licht auslösbares Schäumen des Matrixmaterials enthält.

Ein wesentlicher Aspekt der vorliegenden Erfindung ist die Kombination eines Absorbermaterials, das Laserlicht oder IR-Licht absorbiert und damit Energie lokal konzentriert und dadurch eine lokale Erwärmung in dem Matrixmaterial am Ort der Bestrahlung bewirkt, mit einem Treibmittel, welches beim Erwärmen aufgrund der Bestrahlung mit dem Laserlicht oder IR-Licht ein das Matrixmaterial schäumendes Gas erzeugt. Die lokale Erwärmung in dem Matrixmaterial am Ort der Bestrahlung mit dem Laserlicht oder IR-Licht hat neben dem Auslösen des Schäumens des Treibmittels die weitere Funktion, das thermoplastische Matrixmaterial zu erweichen und dadurch das Schäumen des Materials erst zu ermöglichen. Beginnt das Treibmittel im festen Matrixmaterial mit der Gaserzeugung, so wird je nach Stabilität des Matrixmaterials und Heftigkeit der Gaserzeugung entweder das Gas sich nicht ausdehnen und in dem Matrixmaterial gefangen bleiben oder das feste Matrixmaterial durch die Gasausdehnung sprengen und teilweise zerstören. Das lokale Erweichen des Matrixmaterials durch Erwärmung am Ort der Bestrahlung erlaubt jedoch die gewünschte gezielte Schaumbildung.

Als Treibmittel in dem Additiv der vorliegenden Erfindung sind im Wesentlichen alle Stoffe und Stoffzusammensetzungen geeignet, die sich in das Matrixmaterial einbringen lassen und die beim Erwärmen ein schäumendes Gas erzeugen. Dabei kann es sich um Stoffe handeln, die direkt beim Erwärmen unter Gaserzeugung zerfallen oder reagieren. Es kann sich aber auch um solche Stoffe handeln, bei denen die Gaserzeugung durch andere Auslöser als die Erwärmung alleine initiiert wird, beispielsweise durch die Reaktion mit einem weiteren Stoff, der erst durch die Erwärmung zur Reaktion mit dem eigentlichen Gaserzeuger gebracht wird, oder durch eine Veränderung des pH-Wertes in der Umgebung des Gaserzeugers, wobei die pH-Wertänderung durch die Erwärmung bewirkt werden kann. Die Reaktionsmechanismen der Gaserzeugung aus dem Treibmittel sind durch diese beispielhaften Angaben nicht beschränkt.

Als Absorbermaterialien in dem Additiv der vorliegenden Erfindung sind im Wesentlichen alle Stoffe und Stoffzusammensetzungen geeignet, die sich in das Matrixmaterial einbringen lassen und die Laserlicht oder IR-Licht absorbieren, die Energie des Laserlichts oder IR-Lichts lokal konzentrieren und dabei am Ort der Bestrahlung eine Erwärmung bewirken. Es versteht sich, dass das Absorbermaterial bzw. die Kombination aus Absorbermaterial und Matrixmaterial so gewählt werden muss, dass es/sie eine höhere Absorption für das eingesetzte Laserlicht oder IR-Licht bestimmter Wellenlänge und/oder Energie als das Matrixmaterial alleine besitzt.

In einer weiteren Ausführungsform der Erfindung ist das Absorbermaterial so ausgewählt, dass es Laserlicht im Wellenlängenbereich für ultraviolette Strahlung (UV) von 100 bis 400 nm, beispielsweise Excimer-Laser, oder Laserlicht im Wellenlängenbereich von 9000 bis 11000 nm, beispielsweise CO2-Laser, absorbiert oder Laserlicht oder IR-Licht im Wellenlängenbereich von 700 bis 2000 nm, vorzugsweise 950 bis 1500 nm absorbiert.

Erfindungsgemäß enthält das Matrixmaterial aus Kunststoff oder Lack das Additiv in einer Menge von 0,01 bis 50 Gew.-%. In einer weiteren Ausführungsform der Erfindung enthält das Matrixmaterial 1,0 bis 30 Gew.-% des Additivs oder 3,0 bis 20 Gew.-% des Additivs oder 5,0 bis 10 Gew.-% des Additivs bezogen auf das Gewicht des Matrixmaterials.

Das Matrixmaterial kann eine Polymermaterial (Kunststoff) oder ein Lack sein. Bevorzugt ist es ein thermoplastischer Kunststoff. In einer weiteren Ausführungsform der Erfindung ist das Matrixmaterial aus der Gruppe ausgewählt ist, bestehend aus Polyvinylbutyral (PVB), Polypropylen (PP), Polyethylen (PE), Polyamid (PA), Polybutylenterephthalat (PBT), Polyethylenterephthalat (PET), Polyester, Polyphenylenoxid, Polyacetal, Polymethacrylat, Polyoxymethylen, Polyvinylacetal, Polystyrol, Acryl-Butadien-Styrol (ABS), Acrylnitril-Styrol-Acrylester (ASA), Polycarbonat, Polyethersulfon, Polyetherketon, Polyvinylchlorid, thermoplastischem Polyurethan und/oder deren Copolymeren und/oder Mischungen davon.

Die Erfindung umfasst weiterhin auch Verwendung eines Additivs der zuvor beschriebenen erfindungsgemäßen Art zur Herstellung eines an der Oberfläche mittels Laserlicht oder IR-Licht mit geschäumten Strukturen versehbaren Matrixmaterials, vorzugsweise mit Blindenschrift (Brailleschrift) versehbaren Matrixmaterials aus Kunststoff oder Lack und/oder zur Herstellung eines mittels Laserlicht oder IR-Licht schweißbaren Materials.

Das Laserschweißen von Kunststoffen, die Absorbermaterialien für das verwendete Laserlicht oder IR-Licht enthalten, ist bekannt, jedoch sind diese Verfahren mit dem Problem behaftet, dass zwischen den zu verschweißenden Kunststoffteilen Spalten oder Lücken entstehen bzw. verbleiben können, in denen kein Kontakt zwischen den Kunststoffteilen entsteht, wodurch die Schweißverbindung unvollständig und instabil werden kann. Beim Laserschweißen von erfindungsgemäßen Kunststoffteilen werden hingegen mit Vorteil die Spalten und Lücken beim Aufschmelzen an den Schweißverbindungsstellen aufgrund der Schäumung ausgefüllt und eine vollflächige Schweißverbindung gewährleistet.

Zweckmäßigerweise fügt man dem Matrixmaterial 0,01 bis 50 Gew.-% des Additivs oder 1,0 bis 30 Gew.-% des Additivs oder 3,0 bis 20 Gew.-% des Additivs oder 5,0 bis 10 Gew.-% des Additivs bezogen auf das Gewicht des Matrixmaterials hinzu.

Die optimale Zusammensetzung und Menge des Additivs, welches zum gezielten Schäumen in eine Kunststoffmatrix einzubringen ist, kann der Fachmann bei einem gegebenen Kunststoffmaterial in Kenntnis der Erfindung durch wenige Versuche ermitteln. Die Zusammensetzung und Menge des Additivs werden u.a. von dem verwendeten und zu schäumenden Kunststoffmaterial und von dem gewünschten Schäumungsergebnis unter Berücksichtigung der anzuwendenden Schäumungsbedingungen und dem zu verwendenden Laser abhängen. Geeigneterweise enthält das erfindungsgemäße Additiv das Treibmittel und den Absorber in einem Gewichtsverhältnis von 20:1 bis 1:20, vorzugsweise 15:1 bis 1:15, besonders bevorzugt 10:1 bis 1 :10, weiter bevorzugt 5:1 bis 1:5 oder 3:1 bis 1:3. Da das Absorbermaterial in der Regel das teurere Material ist, wird man den Absorber zweckmäßigerweise in einer geringeren Menge einsetzen als das Treibmittel.

Das Additiv wird vorzugsweise so ausgewählt bzw. zusammengesetzt, dass es unterhalb einer bestimmten Temperatur und insbesondere bei Raumtemperatur noch nicht unter Bildung von Gas reagiert oder zerfällt. Die Freisetzung von Gas soll erst bei erhöhter Temperatur, welche durch die Bestrahlung mit dem Laserlicht oder IR-Licht hervorgerufen wird, erfolgen. Zweckmäßigerweise wird bei dem erfindungsgemäßen Additiv bzw. der erfindungsgemäßen Matrixzusammensetzung die Freisetzung von Gas aus dem Treibmittel bzw. der Treibmittelzusammensetzung bei einer Temperatur im Bereich von 80 bis 400 °C, vorzugsweise 110 bis 350 °C, besonders bevorzugt 140 bis 300 °C erfolgen.

Die Eigenschaften und die Reaktivität des Treibmittels in dem Additiv lässt sich durch weitere Zusätze beeinflussen. In weiteren Ausführungsformen der Erfindung kann das Additiv beispielsweise Mittel zur Verhinderung oder Verzögerung der vorzeitigen Reaktion des Treibmittels enthalten, wobei das Mittel bevorzugt ausgewählt ist unter Getreidestärke, wie beispielsweise Maisstärke, Reisstärke oder Weizenstärke, modifizierten Mehlen, Siliziumdioxid, wie beispielsweise pyrogener Kieselsäure, hydrophober Kieselsäure oder hydrophiler Kieselsäure, Tricalciumphosphaten, Calciumcarbonat, Calciumsulfat, Silanen, Fetten und Gemischen der vorgenannten. Durch die Zugabe solcher Mittel kann nicht nur die vorzeitige Reaktion des Treibmittels verhindert oder verzögert werden, sondern auch die Reaktionsgeschwindigkeit in der Kunststoffmatrix beeinflusst werden.

Das Einbringen des Additivs in Kunststoffmatrixmaterial kann zweckmäßigerweise über einen sogenannten Masterbatch erfolgen. Unter dem Begriff Masterbatch versteht man in eine Kunststoffmatrix eingebettete Additive in Form von Granulaten, in denen die Additive in Konzentrationen vorliegen, die höher sind als in der Endanwendung. Sie werden dem Kunststoff (Rohpolymer) zum Einfärben oder zur Veränderung der Eigenschaften beigemischt. Masterbatches haben gegenüber dem Zusatz von verschiedenen Stoffen in Form von Pasten, Pulvern oder Flüssigkeiten den Vorteil, dass sie eine hohe Prozesssicherheit gewährleisten und sehr gut zu verarbeiten sind. Bei einem Masterbatch wird meist versucht das Additiv soweit wie möglich zu konzentrieren, d.h. so wenig Kunststoffmatrixmaterial wie möglich zu verwenden, um das Additiv oder die Additive einzubetten. Zur Herstellung eines Masterbatch werden die Additive, z.B. auch Farbpigmente, mit Rohpolymer, d. h. unbehandeltem Kunststoff-Granulat, vermischt. Diese Mischung wird anschließend in einem Extruder aufgeschmolzen und dann granuliert. Alternativ können die Komponenten auch direkt über unterschiedliche Dosierwaagen im Extruder gemischt und aufgeschmolzen werden. Ein Masterbatch ermöglicht eine einfache Handhabung aufgrund guter Dosierbarkeit.

Im Falle der Bereitstellung der erfindungsgemäßen Schäumungsmittel in einem Masterbatch ist darauf zu achten, dass die Schmelztemperatur des Polymerträgermaterials für den Masterbatch nicht höher ist als die Zersetzungs- oder Reaktionstemperatur des Treibmittels. Daher werden hier für den Masterbatch vorzugsweise niedrig Schmelzende Polymere, wie z.B. Polyethylen, insbesondere LDPE oder LLDPE und EVA, verwendet.

Erfindungsgemäß besonders bevorzugte Matrixmaterialien sind thermoplastische Polymere, beispielsweise Polyolefine, wie Polyethylen, Polypropylen, Polybutylen, Polymethylpenten sowie Block-, Pfropf- und Copolymere davon, Styrolpolymere, wie Standard-Polystyrol, schlagfestes Polystyrol, Styrolacrylnitril, Acrylnitrilbutadienstyrol, Acrylnitrilstyrol, Acrylkautschuk, halogenhaltige Vinylpolymer, wie Polyvinylchlorid, Polyvinylidenchlorid, Polyvinylfluorid, Tetrafluormethylen-Hexafluormethylen-Copolymer, Ethylen-Tetrafluorethylen-Copolymer, Polychlortrifluorethylen, Ethyl-en-Chlortrifluorethylen-Copolymer, Acrylpoymere, Polyacrylat, Polymethacrylat, Polyacetale, wie Polyoxymethylen, lineare Polykondensate wie Polyamide (PA-6, PA-66, PA-610, PA-612, PA-11, PA-12 etc.), Polycarbonate, Polyester (z. B. Polyethylenterephthalat, Polybutylenterephthalat etc.), Polyimide, Polyarylketone, Polysulfone, Polyurethane, Polyphenylene, Polymere aus ungesättigten Alkoholen und Aminen oder Acylderivaten oder Acetalen davon, wie Polyvinylalkohol, Polyvinylacetate, Polyvinylbutyral, Polyvinylbenzoat, vernetzte Polykondensate und Polyadukte, wie Phenoplaste, Aminoplaste, Epoxidharze, ungesättigte Polyester, Polyurethan, modifizierte Naturstoffe, wie Cellulosester, einschließlich Copolymere oder Mischungen der vorgenannten Polymere.

Neben Kunststoffen bzw. thermoplastischen Polymeren eignen sich erfindungsgemäß als Matrixmaterialen auch jegliche Arten von Lacken, die nachfolgend beschrieben sind.

Einkomponentenlacke (1 K-Lacke) enthalten Bindemittel als Dispersion in wässriger Lösung oder gelöst im Lösemittel. Bei Zweikomponentenlacken (2K-Lacke) besteht das Bindemittel aus Harz und Härter. Diese werden getrennt gelagert und kurz vor dem Verarbeiten miteinander gemischt. Sie reagieren chemisch und härten (ohne Trocknung) aus. Manche 2K-Lacke enthalten keine Lösemittel. Bindemittel umfassen natürliche Harze und Öle (Ölfarbe), Pflanzenbestandteile (Chinalack, Japanlack), Ei (Eitempera), Gummi Arabicum (Aquarellfarbe), Kalk (Kalkfarbe), Leim (Leimfarbe), Teer oder Bitumen.

Liegt das Bindemittel nicht in flüssiger Form vor, wird als zusätzlicher Bestandteil ein Lösemittel benötigt, das in der Lage ist, das Bindemittel zu lösen. Lösemittel in physikalisch trocknenden Lacken sind in der Regel farblos, dürfen das Bindemittel nicht negativ beeinflussen und verdunsten rückstandslos. Die meisten Lösemittel für Lacke sind organische Lösemittel. Es kommen aber auch lösemittelfreie Systeme zur Anwendung, wie Pulverlacke oder Suspensionen von Lackpartikelteilchen in Wasser. Filmbildner bilden nach der Lackauftragung und Trocknung eine zusammenhängende Schicht (den Film) mit guten chemischen und mechanischen Eigenschaften. Die Filmbildner gehen im Verlauf der Trocknung, der Lackhärtung, in hochmolekulare Verbindungen über. Niedermolekulare Filmbildner sind z. B. Nitrocellulose, Vinylchlorid-Vinylacetat-Copolymere, hochmolekulare Filmbildner sind beispielsweise ungesättigte Polyesterharze, Epoxidharze.

Erfindungsgemäß geeignete Lacke umfassen Öllacke, Cellulosenitratlacke, Alkydharzlacke, Polyvinylesterlacke, wie Dispersionen aus Polyvinylacetat, Acrylharzlacke, wie Polayacrylatlacke und Polymethacrylatlacke, Silikonharzlacke, Epoxidharzlacke und Polyurethanlacke.

### Beispiele

Die Erfindung wird nun anhand von Ausführungsbeispielen weiter erläutert.

### Beispiel 1

Ein Polyethylen geringer Dichte (LDPE) wurde mit 2 Gew.-% eines Gemisches aus Dinatriumdihydrogendiphosphat und einem äquimolaren Teil an Natriumhydrogencarbonat und 1 Gew.-% Kupferhydroxidphosphat extrudiert. Es wurde ein Extruder ZSK 18 der Fa. Coperion verwendet. Das erhaltene Polymermaterial wurde mittels einer NdYAG-Laserstrahlquelle (1064nm) mit einer Buchstabenfolge beschriftet. Durch Schäumung an der Oberfläche entstand eine taktile Schrift mit einer Höhe von der Oberfläche von 0,5 mm.

### Beispiel 2

Es wurden 200 g eines Polymaid 6 (PA6) im Brabender-Kneter aufgeschmolzen und 2 Gew.-% (4g) einer Treibmittelmischung aus Monocalciumdihydrogenmonophosphat und einer äquimolaren Menge an Calciumcarbonat zugegeben und für weitere 30 Sekunden geknetet. Anschließend wurden 2 Gew.-% eines NIR-Absorbers auf Basis eines Glimmers zugegeben. Der Kneter wurde anschließend angehalten und der Kunststoff herausgenommen. Das erhaltene Polymermaterial wurde mittels einer NdYAG-Laserstrahlquelle (1064nm) mit einem schriftförmigen Muster bestrahlt. Dabei wurde eine taktile Schrifthöhe von 0,5mm von der Oberfläche erreicht.

### Beispiel 3

Ein Preform aus Polypropylen (PP) mit 0,5 Gew.-% eines Treibmittels auf Basis eines Natriumcitrates in Kombination mit einem Calciumcarbonat und zusätzlich 0,1 Gew.-% Absorber auf Basis eines Metallphosphates wurde mittels einer IR-Lampe bis zum Schmelzpunkt des Polymers erhitzt. Dabei wurde ein Schäumungsvorgang ausgelöst. Es entstand eine geschäumte Fläche mit gegenüber dem ungeschäumten Material deutlich verbesserten thermischen Isolationseigenschaften.

## Patentansprüche

1. Additiv für ein Matrixmaterial aus Kunststoff oder Lack für ein durch Bestrahlung mit Laserlicht oder IR-Licht auslösbares Schäumen des Matrixmaterials, wobei das Additiv wenigstens folgende Bestandteile umfasst:
a) wenigstens ein Absorbermaterial, welches eingebettet oder gelöst in dem Matrixmaterial Laserlicht oder IR-Licht absorbiert und eine lokale Erwärmung in dem Matrixmaterial am Ort der Bestrahlung mit Laserlicht oder IR-Licht bewirkt, und
b) wenigstens ein Treibmittel, welches beim Erwärmen aufgrund der Bestrahlung mit Laserlicht oder IR-Licht auf Temperaturen über 50 °C durch Zerfall, chemische Umwandlung oder Reaktion ein das Matrixmaterial schäumendes Gas erzeugt,
wobei das Treibmittel unter folgenden ausgewählt ist:
i) Kohlendioxidträger, die unter Zerfall und/oder Reaktion mit wenigstens einem weiteren Stoff CO₂-Gas erzeugen,
ausgewählt unter Carbonaten, Hydrogencarbonaten und Carbamaten der Alkalimetalle, der Erdalkalimetalle, des Aluminiums, der Übergangsmetalle und/oder von Ammonium,
vorzugsweise ausgewählt unter Natriumcarbonat, Natriumhydrogencarbonat, Magnesiumcarbonat, Magnesiumhydrogencarbonat, Calciumcarbonat, Calciumhydrogencarbonat, Aluminiumcarbonat, Aluminiumhydrogencarbonat, Eisencarbonat, Eisenhydrogencarbonat, Ammoniumcarbonat, Ammoniumhydrogencarbonat, Ammoniumcarbamat, und Gemischen der vorgenannten,
ii) Kohlendioxidträger in Kombination mit Säureträgem, die unter Zerfall und/oder Reaktion CO₂-Gas erzeugen, wobei der Kohlendioxidträger unter den unter i) angegebenen Verbindungen ausgewählt ist und der Säureträger ausgewählt ist unter Salzen von Phosphor enthaltenden Oxoanionen, vorzugsweise unter Phosphaten, kondensierten Phosphaten, Phosphonaten, Phosphiten, gemischten Hydroxidphosphaten und Cyanuraten,
besonders bevorzugt ausgewählt unter saurem Natrium-Pyrophosphat (SAPP), Monocalciumphosphat-Monohydrat (MCPM), Dicalciumphosphat-Dihydrat (DCPD), Natrium-Aluminium-Sulfat (SAS), Natrium-Aluminium-Phosphat (SALP), Calcium-Magnesium-Aluminium-Phosphat, Calciumpolyphosphat, Magnesiumpolyphosphat und Gemischen der vorgenannten,
iii) Verbindungen, die unter Zerfall wenigstens N₂-Gas erzeugen,
vorzugsweise ausgewählt unter Azoverbindungen, Hydraziden, Semicarbaziden, Triazolen, Tetrazolen, N-Nitrosoverbindungen, Benzoxazinen,
iv) Verbindungen, die unter Zerfall und/oder Reaktion mit wenigstens einem weiteren Stoff Kohlendioxid und Wasser erzeugen,
vorzugsweise ausgewählt unter organischen Carbonsäuren und deren Salzen, vorzugsweise Zitronensäure, Zitrat, Fumarsäure und Fumarat,
und
v) Kombinationen und Gemische der vorgenannten, und
wobei das Absorbermaterial unter folgenden ausgewählt ist:
i) Phosphaten, kondensierten Phosphaten, Phosphonaten, Phosphiten und gemischten Hydroxid-Phosphat-Oxoanionen von Metallen, die unter den Elementen der 3. bis 6. Periode der II. und III. Hauptgruppe, der 5. bis 6. Periode der IV- Hauptgruppe sowie der 4. bis 5. Periode der III. bis VIII. Nebengruppe und der Lanthaniden des Periodensystems der Elemente ausgewählt sind, vorzugsweise Cu, Sn, Ca, Mo, Fe, Co, Sn,
bevorzugter unter Kupfer-Phosphaten, Zinn-Phosphaten, Eisen-Phosphaten, Nickel-Phosphaten, Molybdän-Phosphaten, Kobalt-Phosphaten, Mangan-Phosphaten und Antimon-Phosphaten,
besonders bevorzugt unter Kupfer-Phosphaten, Zinn-Phosphaten und Eisen-Phosphaten,
ganz besonders bevorzugt Kupfer-Hydroxidphosphat [KHP; Cu₄(OH)₂(PO₄)₂],
ii) Metalloxiden und Metallmischoxiden,
vorzugsweise unter Antimonoxid (Sb2O3), Zinnoxid (SnO4), Titanoxid (TiO2), Indiumzinnoxid (In2O3/SnO2; ITO), Antimonzinnoxid (ATO)
iii) plättchenförmigen Pigmenten aus Metall, vorzugsweise aus Al, Cr, Fe, Au oder Ag, unbeschichtet oder mit einer oder mehreren Metalloxidschichten bedeckt, wobei das Metalloxid vorzugsweise unter Titandioxid, Antimon(III)oxid, Zinkoxid, Zinnoxid, Zirkoniumdioxid, Chromoxid, Nickeloxid, Kupferoxid, Kobaltoxid, Eisenoxid (Fe₂O₃, Fe₃O₄) ausgewählt ist, besonders bevorzugt unter Antimon(III)oxid alleine oder in Kombination mit Zinnoxid.
iv) organischen Absorbern, vorzugsweise organischen NIR-Absorbern, besonders bevorzugt Phthalocyaninen und Naphthalocyaninen, insbesondere Kupfer(II)-1,4,8,11,15,18,22,25-octabutoxy-29H,31H-phthalocyanin oder Vanadyl-2,9,16,23-tetraphenoxy-29H,31H-phthalocyanin oder Vanadyl-5,14,23,32-tetraphenyl-2,3-naphthalocyanin oder Vanadyl-2,11,20,29-tetra-tert-butyl-2,3-naphthalocyanin, Lumogenen und Quaterrylene-Farbstoffen.

2. Additiv nach Anspruch 1, **dadurch gekennzeichnet, dass** das Absorbermaterial Laserlicht im Wellenlängenbereich für ultraviolette Strahlung (UV) von 100 bis 400 nm, beispielsweise Excimer-Laser, oder Laserlicht im Wellenlängenbereich von 9000 bis 11000 nm, beispielsweise CO2-Laser, absorbiert oder Laserlicht oder IR-Licht im Wellenlängenbereich von 700 bis 2000 nm, vorzugsweise 950 bis 1500 nm absorbiert.

3. Additiv nach einem der Ansprüche 1 und 2, **dadurch gekennzeichnet, dass** es das Treibmittel und den Absorber in einem Gewichtsverhältnis von 20:1 bis 1:20, vorzugsweise 15:1 bis 1:15, besonders bevorzugt 10:1 bis 1 :10, weiter bevorzugt 5:1 bis 1:5 oder 3:1 bis 1:3 enthält.

4. Matrixmaterial aus Kunststoff, vorzugsweise aus thermoplastischem Kunststoff, oder Lack, **dadurch gekennzeichnet, dass** es 0,01 bis 50 Gew.-% eines Additivs nach einem der Ansprüche 1 bis 3 enthält.

5. Matrixmaterial nach Anspruch 4, **dadurch gekennzeichnet, dass** es 1,0 bis 30 Gew.-% des Additivs oder 3,0 bis 20 Gew.-% des Additivs oder 5,0 bis 10 Gew.-% des Additivs bezogen auf das Gewicht des Matrixmaterials enthält.

6. Matrixmaterial nach einem der Ansprüche 4 und 5, **dadurch gekennzeichnet, dass** es aus der Gruppe ausgewählt ist, bestehend aus Polyvinylbutyral (PVB), Polypropylen (PP), Polyethylen (PE), Polyamid (PA), Polybutylenterephthalat (PBT), Polyethylenterephthalat (PET), Polyester, Polyphenylenoxid, Polyacetal, Polymethacrylat, Polyoxymethylen, Polyvinylacetal, Polystyrol, Acryl-Butadien-Styrol (ABS), Acrylnitril-Styrol-Acrylester (ASA), Polycarbonat, Polyethersulfon, Polyetherketon, Polyvinylchlorid, thermoplastischem Polyurethan und/oder deren Copolymeren und/oder Mischungen davon.

7. Verwendung eines Additivs nach einem der Ansprüche 1 bis 3 zur Herstellung eines an der Oberfläche mittels Laserlicht oder IR-Licht mit geschäumten Strukturen versehbaren Matrixmaterials, vorzugsweise mit Blindenschrift (Brailleschrift) versehbaren Matrixmaterials aus Kunststoff oder Lack und/oder zur Herstellung eines mittels Laserlicht oder IR-Licht schweißbaren Materials.

8. Verwendung nach Anspruch 7, **dadurch gekennzeichnet, dass** man dem Matrixmaterial 0,01 bis 50 Gew.-% des Additivs oder 1,0 bis 30 Gew.-% des Additivs oder 3,0 bis 20 Gew.-% des Additivs oder 5,0 bis 10 Gew.-% des Additivs bezogen auf das Gewicht des Matrixmaterials hinzufügt.

## Claims

1. Additive for a matrix material made of plastic or varnish, for foaming of the matrix material which can be triggered by irradiation with laser light or IR light, wherein the additive comprises at least the following constituents:
a) at least one absorber material which, embedded or dissolved in the matrix material, absorbs laser light or IR light and brings about local heating in the matrix material at the site of the irradiation with laser light or IR light, and
b) at least one blowing agent which, when heated due to the irradiation with laser light or IR light to temperatures above 50°C, produces, by decomposition, chemical conversion or reaction, a gas which foams the matrix material,
wherein the blowing agent is selected from the following:
i) carbon dioxide carriers which produce CO₂ gas during decomposition and/or reaction with at least one other substance,
selected from carbonates, hydrogen carbonates and carbamates of the alkali metals, alkaline earth metals, aluminium, transition metals and/or ammonium,
preferably selected from sodium carbonate, sodium hydrogen carbonate, magnesium carbonate, magnesium hydrogen carbonate, calcium carbonate, calcium hydrogen carbonate, aluminium carbonate, aluminium hydrogen carbonate, iron carbonate, iron hydrogen carbonate, ammonium carbonate, ammonium hydrogen carbonate, ammonium carbamate, and mixtures of the above,
ii) carbon dioxide carriers in combination with acid carriers which produce CO₂ gas during decomposition and/or reaction, wherein the carbon dioxide carrier is selected from the compounds given under i) and the acid carrier is selected from salts of phosphorus-containing oxoanions, preferably from phosphates, condensed phosphates, phosphonates, phosphites, mixed hydroxide phosphates and cyanurates,
particularly preferably selected from sodium acid pyrophosphate (SAPP), monocalcium phosphate monohydrate (MCPM), dicalcium phosphate dihydrate (DCPD), sodium aluminium sulphate (SAS), sodium aluminium phosphate (SALP), calcium magnesium aluminium phosphate, calcium polyphosphate, magnesium polyphosphate and mixtures of the above,
iii) compounds which produce at least N₂ gas during decomposition,
preferably selected from azo compounds, hydrazides, semicarbazides, triazols, tetrazols, N-nitroso compounds, benzoxazines,
iv) compounds which produce carbon dioxide and water during decomposition and/or reaction with at least one other substance,
preferably selected from organic carboxylic acids and salts thereof, preferably citric acid, citrate, fumaric acid and fumarate,
and
v) combinations and mixtures of the above, and
wherein the absorber material is selected from the following:
i) phosphates, condensed phosphates, phosphonates, phosphites and mixed hydroxide-phosphate-oxoanions of metals which are selected from the elements of the 3rd to 6th period of main groups II and III, of the 5th to 6th period of main group IV and of the 4th to 5th period of sub-groups III to VIII and the lanthanides of the periodic table of the elements, preferably Cu, Sn, Ca, Mo, Fe, Co, Sn, more preferably from copper phosphates, tin phosphates, iron phosphates, nickel phosphates, molybdenum phosphates, cobalt phosphates, manganese phosphates and antimony phosphates,
particularly preferably from copper phosphates, tin phosphates and iron phosphates,
quite particularly preferably copper-hydroxide phosphate [KHP; Cu₄(OH)₂(PO₄)₂],
ii) metal oxides and mixed metal oxides,
preferably from antimony oxide (Sb₂O₃), tin oxide (SnO₄), titanium oxide (TiO₂), indium tin oxide (In₂O₃/SnO₂; ITO), antimony tin oxide (ATO),
iii) platelike pigments of metal, preferably of Al, Cr, Fe, Au or Ag, uncoated or covered with one or more metal oxide layers, wherein the metal oxide is preferably selected from titanium dioxide, antimony(III)oxide, zinc oxide, tin oxide, zirconium dioxide, chromium oxide, nickel oxide, copper oxide, cobalt oxide, iron oxide (Fe₂O₃, Fe₃O₄), particularly preferably from antimony(III)oxide alone or in combination with tin oxide,
iv) organic absorbers, preferably organic NIR-absorbers, particularly preferably phthalocyanines and naphthalocyanines, in particular copper(II)-1,4,8,11,15,18,22,25-octabutoxy-29H,31H-phthalocyanine or vanadyl-2,9,16,23-tetraphenoxy-29H,31H-phthalocyanine or vanadyl-5,14,23,32-tetraphenyl-2,3-naphthalocyanine or vanadyl-2,11,20,29-tetra-tert-butyl-2,3-naphthalocyanine, lumogens and quaterrylene dyes.

2. Additive according to claim 1, **characterized in that** the absorber material absorbs laser light in the wavelength range for ultraviolet radiation (UV) of 100 to 400 nm, for example excimer lasers, or laser light in the wavelength range of 9000 to 11000 nm, for example CO2 lasers, or absorbs laser light or IR light in the wavelength range of 700 to 2000 nm, preferably 950 to 1500 nm.

3. Additive according to one of claims 1 and 2, **characterized in that** it contains the blowing agent and the absorber in a weight ratio of 20:1 to 1:20, preferably 15:1 to 1:15, particularly preferably 10:1 to 1:10, further preferably 5:1 to 1:5 or 3:1 to 1:3.

4. Matrix material made of plastic, preferably made of thermoplastic polymer or varnish, **characterized in that** it contains 0.01 to 50 wt.% of an additive according to one of claims 1 to 3.

5. Matrix material according to claim 4, **characterized in that** it contains 1.0 to 30 wt.% of the additive or 3.0 to 20 wt.% of the additive or 5.0 to 10 wt.% of the additive relative to the weight of the matrix material.

6. Matrix material according to one of claims 4 and 5, **characterized in that** it is selected from the group consisting of polyvinyl butyral (PVB), polypropylene (PP), polyethylene (PE), polyamide (PA), polybutylene terephthalate (PBT), polyethylene terephthalate (PET), polyester, polyphenylene oxide, polyacetal, polymethacrylate, polyoxymethylene, polyvinyl acetal, polystyrene, acryl-butadiene-styrene (ABS), acrylonitrile-styrene-acrylester (ASA), polycarbonate, polyethersulphone, polyetherketone, polyvinyl chloride, thermoplastic polyurethane and/or copolymers and/or mixtures thereof.

7. Use of an additive according to one of claims 1 to 3 for the production of a matrix material made of plastic or varnish provided with foamed structures at the surface by means of laser light or IR light, preferably with Braille script, and/or for the production of a material which can be welded by means of laser light or IR light.

8. Use according to claim 7, **characterized in that** 0.01 to 50 wt.% of the additive or 1.0 to 30 wt.% of the additive or 3.0 to 20 wt.% of the additive or 5.0 to 10 wt.% of the additive relative to the weight of the matrix material is added to the matrix material.

## Revendications

1. Additif pour matériau de matrice constitué d'une matière plastique ou d'une laque, pour une expansion du matériau de matrice pouvant être déclenchée par irradiation avec une lumière laser ou une lumière IR, l'additif comprenant au moins les constituants suivants :
a) au moins un matériau absorbant qui, incorporé ou dissous dans le matériau de matrice, absorbe la lumière laser ou la lumière IR et provoque un échauffement local du matériau de matrice sur le site de l'irradiation avec la lumière laser ou la lumière IR, et
b) au moins un agent d'expansion qui, lors de l'échauffement, en raison de l'irradiation par la lumière laser ou la lumière IR, à des températures supérieures à 50°C, génère par décomposition, conversion chimique ou réaction un gaz faisant mousser le matériau de matrice,
l'agent d'expansion étant choisi parmi les suivants :
i) les supports de dioxyde de carbone qui génèrent du CO₂ gazeux par décomposition et/ou réaction avec au moins une substance supplémentaire, choisis parmi les carbonates, les hydrogénocarbonates et les carbamates de métaux alcalins, de métaux alcalino-terreux, d'aluminium, de métaux de transition et/ou d'ammonium,
choisis de préférence parmi le carbonate de sodium, l'hydrogénocarbonate de sodium, le carbonate de magnésium, l'hydrogénocarbonate de magnésium, le carbonate de calcium, l'hydrogénocarbonate de calcium, le carbonate d'aluminium, l'hydrogénocarbonate d'aluminium, le carbonate de fer, l'hydrogénocarbonate de fer, le carbonate d'ammonium, l'hydrogénocarbonate d'ammonium, le carbamate d'ammonium et les mélanges de ceux-ci,
ii) les supports de dioxyde de carbone en combinaison avec des supports d'acides qui génèrent du CO₂ gazeux par décomposition et/ou réaction, le support de dioxyde de carbone étant choisi parmi les composés indiqués en i), et le support d'acide étant choisi parmi les sels d'oxo-anions contenant du phosphore, de préférence parmi les phosphates, les phosphates condensés, les phosphonates, les phosphites, les hydroxyphosphates mixtes et les cyanurates,
choisis d'une manière particulièrement préférée parmi le pyrophosphate acide de sodium (SAPP), le phosphate monocalcique monohydraté (MCPM), le phosphate dicalcique dihydraté (DCPD), le sulfate de sodium et d'aluminium (SAS), le phosphate de sodium et d'aluminium (SALP), le phosphate de calcium, de magnésium et d'aluminium, le polyphosphate de calcium, le polyphosphate de magnésium et des mélanges de ceux-ci,
iii) les composés qui génèrent au moins du N₂ gazeux par décomposition, choisis de préférence parmi les composés azo, les hydrazines, les semi-carbazides, les triazoles, les tétrazoles, les composés N-nitro, les benzoxazines,
iv) les composés qui génèrent du dioxyde de carbone et de l'eau par décomposition et/ou réaction avec au moins une substance supplémentaire,
choisis de préférence parmi les acides carboxyliques organiques et leurs sels, de préférence l'acide citrique, un citrate, l'acide fumarique et un fumarate, et
v) les combinaisons et mélanges de ceux-ci, et
le matériau absorbant étant choisi parmi les suivants :
i) les phosphates, phosphates condensés, phosphonates, phosphites et oxo-anions hydroxyphosphates mixtes de métaux, qui sont choisis parmi les éléments de la troisième à la sixième période du deuxième et du troisième groupe principal, de la cinquième à la sixième période du quatrième groupe principal, ainsi que de la quatrième à la cinquième période du troisième au huitième groupe secondaire, et les lanthanides, du système périodique des éléments, de préférence Cu, Sn, Ca, Mo, Fe, Co, Sn,
de préférence parmi les phosphates de cuivre, les phosphates d'étain, les phosphates de fer, les phosphates de nickel, les phosphates de molybdène, les phosphates de cobalt, les phosphates de manganèse et les phosphates d'ammonium,
d'une manière particulièrement préférée parmi les phosphates de cuivre, les phosphates d'étain et les phosphates de fer,
d'une manière tout particulièrement préférée l'hydroxyphosphate de cuivre [KHP ; Cu₄(OH)₂(PO₄)₂],
ii) les oxydes métalliques et les oxydes métalliques mixtes,
choisis de préférence parmi l'oxyde d'antimoine (Sb₂O₃), l'oxyde d'étain (SnO₄), l'oxyde de titane (TiO₂), l'oxyde d'indium et d'étain (In₂O₃/SnO₂ ; ITO), l'oxyde d'antimoine et d'étain (ATO),
iii) les pigments lamellaires de métal, de préférence d'Al, Cr, Fe, Au ou Ag, non revêtus ou recouverts d'une ou de plusieurs couches d'oxydes métalliques, l'oxyde métallique étant choisi de préférence parmi le dioxyde de titane, l'oxyde d'antimoine(III), l'oxyde de zinc, l'oxyde d'étain, le dioxyde de zirconium, l'oxyde de chrome, l'oxyde de nickel, l'oxyde de cuivre, l'oxyde de cobalt, l'oxyde de fer (Fe₂O₃, Fe₃O₄), d'une manière particulièrement préférée parmi l'oxyde d'antimoine(III) seul ou en combinaison avec de l'oxyde d'étain,
iv) les absorbants organiques, de préférence les absorbants NIR organiques, d'une manière particulièrement préférée les phtalocyanines et les naphtalocyanines, en particulier la 1,4,8,11,15,18,22,25-octabutoxy-29H,31H-phtalocyanine de cuivre(II) ou la 2,9,16,23-tétraphénoxy-29H, 31H-phtalocyanine de vanadyle ou la 5,14,23,32-tétraphényl-2,3-naphtalocyanine de vanadyle ou la 2,11,20,29-tétra-tert-butyl-2,3-naphtalocyanine de vanadyle, les colorants Lumogen et les colorants de quaterrylène.

2. Additif selon la revendication 1, **caractérisé en ce que** le matériau absorbant absorbe la lumière laser dans la gamme de longueurs d'onde du rayonnement ultraviolet (UV) de 100 à 400 nm, par exemple d'un laser excimère, ou une lumière laser dans la gamme de longueurs d'onde de 9 000 à 11 000 nm, par exemple d'un laser à CO₂, ou absorbe la lumière laser ou la lumière IR dans la gamme de longueurs d'onde de 700 à 2 000 nm, de préférence de 950 à 1 500 nm.

3. Additif selon l'une des revendications 1 et 2, **caractérisé en ce qu'**il contient l'agent d'expansion et l'absorbant selon un rapport en poids de 20:1 à 1:20, de préférence de 15:1 à 1:15, d'une manière particulièrement préférée de 10:1 à 1:10, d'une manière encore plus préférée de 5:1 à 1:5 ou de 3:1 à 1:3.

4. Matériau de matrice en matière plastique, de préférence en matière plastique thermoplastique, ou laque, **caractérisé en ce qu'**il contient 0,01 à 50 % en poids d'un additif selon l'une des revendications 1 à 3.

5. Matériau de matrice selon la revendication 4, **caractérisé en ce qu'**il contient 1,0 à 30 % en poids de l'additif ou 3,0 à 20 % en poids de l'additif ou 5,0 à 10 % en poids de l'additif, sur la base du poids du matériau de matrice.

6. Matériau de matrice selon l'une des revendications 4 et 5, **caractérisé en ce qu'**il est choisi dans le groupe composé du polyvinylbutyral (PVB), du polypropylène (PP), du polyéthylène (PE), du polyamide (PA), du poly(téréphtalate de butylène) (PBT), du poly(téréphtalate d'éthylène) (PET), du polyester, du poly(oxyde de phénylène), du polyacétal, du polyméthacrylate, du polyoxyméthylène, du polyvinylacétal, du polystyrène, de l'acrylonitrile-butadiène-styrène (ABS), de l'acrylonitrile-styrène-acrylate (ASA), du polycarbonate, de la polyéthersulfone, de la polyéthercétone, du poly(chlorure de vinyle), du polyuréthanne thermoplastique et/ou des copolymères et/ou mélanges de ceux-ci.

7. Utilisation d'un additif selon l'une des revendications 1 à 3 pour la fabrication d'un matériau de matrice pouvant sur sa surface être pourvu de structures expansées à l'aide d'une lumière laser ou d'une lumière IR, de préférence d'un matériau de matrice pouvant être pourvu d'une écriture pour aveugles (écriture Braille), en plastique ou laque, et/ou pour la fabrication d'un matériau pouvant être soudé à l'aide d'une lumière laser ou d'une lumière IR.

8. Utilisation selon la revendication 7, **caractérisée en ce qu'**on ajoute au matériau de matrice 0,01 à 50 % en poids de l'additif ou 1,0 à 30 % en poids de l'additif ou 3,0 à 20 % en poids de l'additif ou 5,0 à 10 % en poids de l'additif, sur la base du poids du matériau de matrice.
